# EUROPEAN PATENT SPECIFICATION

(11) **EP 3 711 974 B1**
(45) Date of publication and mention of the grant of the patent: **17.11.2021**
(21) Application number: 20158467.9
(22) Date of filing: 20.02.2020
(51) Int. Cl.: B60C 1/00, B60C 19/00, B60C 23/04

(54) **TIRE**
REIFEN
PNEUMATIQUE

(30) Priority: 20.03.2019 JP 2019052903
(43) Date of publication of application: 23.09.2020
(73) Proprietor: SUMITOMO RUBBER INDUSTRIES, LTD., Chuo-ku Kobe-shi Hyogo 651-0072 (JP)
(72) Inventor: MATSUMOTO, Norihiro, Kobe-shi,, Hyogo 651-0072 (JP)
(74) Representative: TBK

(56) References cited:
- EP-A1- 1 995 082
- EP-A1- 3 196 056
- WO-A1-2016/105937
- FR-A1- 3 059 603

## Description

### BACKGROUND OF THE INVENTION

### Field of the Invention

The present invention relates to a tire.

### Description of the Background Art

It has been known that when an electronic component such as an RFID (Radio Frequency Identifier) tag is mounted to a tire, if a rubber composition having a low relative dielectric constant is used as a rubber composition covering the electronic component, the readability of the electronic component becomes good (see, for example, International Publication WO 2007/100111). However, further improvement in terms of durability is required.

Known tires comprising an electronic component are also disclosed in EP 1995082 A, FR 3059603 A, WO 2016105937 A and EP 3196056 A.

### SUMMARY OF THE INVENTION

The present invention has been made to solve the above-described problem, and an object of the present invention is to provide a tire capable of improving durability and the readability of an electronic component such as an RFID tag in a well-balanced manner.

The present invention is directed to a tire as defined in claim 1. The tire includes: an electronic module including an electronic component and a rubber composition covering the electronic component; and an adjacent rubber member adjacent to the electronic module, wherein a difference in complex elastic modulus E* at 60°C between the rubber composition and the adjacent rubber member is not greater than 2.0 MPa, an amount of carbon black per 100 parts by mass of a rubber component in the rubber composition is 10 to 50 parts by mass, the rubber composition has a volume of 500 to 10000 mm³, and the rubber composition has a relative dielectric constant of 7 or less at 915 MHz.

Preferably, a difference in amount of an isoprene-based rubber, a difference in amount of a styrene-butadiene rubber, and a difference in amount of a butadiene rubber in 100% by mass of a rubber component between the rubber composition and the adjacent rubber member are each not greater than 20% by mass.

Preferably, an amount of an isoprene-based rubber in 100% by mass of the rubber component of the rubber composition is 30 to 100% by mass, and a total amount of a styrene-butadiene rubber and a butadiene rubber in 100% by mass of the rubber component of the rubber composition is 0 to 70% by mass.

Since the present invention is directed to a tire as defined in claim 1, the durability and the readability of the electronic component can be improved in a well-balanced manner.

### DESCRIPTION OF THE PREFERRED EMBODIMENTS

The tire according to the present invention is as defined in claim 1.

When the difference in complex elastic modulus E* between the rubber composition (topping rubber composition) and the adjacent rubber member is set in a predetermined range, stress concentration on the interface therebetween is inhibited, and thus durability is improved. In addition, when the dielectric constant and the volume of the topping rubber composition are set in predetermined ranges, occurrence of noise and radio interference in the electronic module is inhibited, and thus the readability of the electronic component is improved. Owing to these effects, it is inferred that the durability and the readability of the electronic component such as an RFID tag are improved in a well-balanced manner.

The tire includes an electronic module including an electronic component and a rubber composition (topping rubber composition) covering the electronic component.

As the electronic component, for example, an RFID tag or the like can be used. The RFID tag is not particularly limited and may be any of a passive tab, an active tab, and a semi-active tab, and products of Murata Manufacturing Co., Ltd., Hitachi High-Tech Materials Corporation, Intermec, etc., can be used.

Examples of the rubber component contained in the topping rubber composition include diene-based rubbers such as isoprene-based rubbers, styrene-butadiene rubber (SBR), butadiene rubber (BR), acrylonitrile-butadiene rubber (NBR), chloroprene rubber (CR), isobutylene-isoprene rubber (IIR), and styrene-isoprene-butadiene copolymer rubber (SIBR). These rubbers may be used individually, or two or more of these rubbers may be used in combination. Among them, isoprene-based rubbers, SBR, and BR are preferable.

As the isoprene-based rubber, isoprene rubber (IR), natural rubber (NR), epoxidized natural rubber (ENR), etc., can be used. The NR may be reformed NR such as deproteinized natural rubber (DPNR) and ultra-pure natural rubber (UPNR).

In the case where an isoprene-based rubber is contained, the amount of the isoprene-based rubber in 100% by mass of the rubber component is preferably not less than 30% by mass and more preferably not less than 35% by mass, and is preferably not greater than 100% by mass, more preferably not greater than 70% by mass, and further preferably not greater than 65% by mass. When the amount is in the above range, the effects tend to be more favorably achieved.

The SBR is not particularly limited, and, for example, an emulsion-polymerized styrene-butadiene rubber (E-SBR), a solution-polymerized styrene-butadiene rubber (S-SBR), etc., can be used. The SBR may be either an unmodified SBR or a modified SBR.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with a C1-C6 alkyl group), an alkoxy group (preferably, a C1-C6 alkoxy group), and an alkoxysilyl group (preferably, a C1-C6 alkoxysilyl group) are preferable.

As the modified SBR, an SBR modified with a compound (modifier) represented by the following formula is particularly suitable. 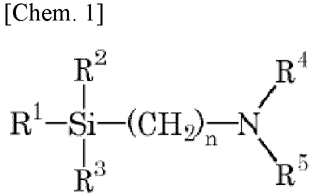 (wherein R¹, R², and R³ are the same or different from each other, and each represent an alkyl group, an alkoxy group, a silyloxy group, an acetal group, a carboxyl group (-COOH), a mercapto group (-SH), or a derivative thereof. R⁴ and R⁵ are the same or different from each other, and each represent a hydrogen atom or an alkyl group. R⁴ and R⁵ may be linked together to form a ring structure together with a nitrogen atom. "n" represents an integer.)

As the modified SBR modified with the compound (modifier) represented by the above formula, an SBR obtained by modifying the polymerization terminals (active terminals) of a solution-polymerized styrene-butadiene rubber (S-SBR) with the compound represented by the above formula (modified SBR disclosed in Japanese Laid-Open Patent Publication No. 2010-111753, etc.) is suitably used.

As R¹, R², and R³, an alkoxy group is suitable (an alkoxy group preferably having 1 to 8 carbon atoms, more preferably 1 to 4 carbon atoms). As R⁴ and R⁵, an alkyl group (preferably, an alkyl group having 1 to 3 carbon atoms) is suitable. The integer "n" is preferably 1 to 5, more preferably 2 to 4, and further preferably 3. In addition, when R⁴ and R⁵ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified SBR, a modified SBR modified with the following compound (modifier) is suitably used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-p-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified SBRs modified with alkoxysilanes are preferable.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

In the case where an SBR is contained, the amount of the SBR in 100% by mass of the rubber component is preferably not less than 30% by mass and more preferably not less than 35% by mass, and is preferably not greater than 70% by mass and more preferably not greater than 65% by mass. When the amount is in the above range, the effects tend to be more favorably achieved.

The BR is not particularly limited, and a BR having a high cis content, a BR having a low cis content, a BR containing syndiotactic polybutadiene crystal, etc., can be used. The BR may be either an unmodified BR or a modified BR, and an example of the modified BR is a modified BR into which the aforementioned functional group is introduced. These BRs may be used individually, or two or more of these BRs may be used in combination. The cis content of the BR is suitably not less than 90% by mass (preferably not less than 95% by mass).

The cis content can be measured by infrared absorption spectrometry.

As the BR, for example, products of Ube Industries, Ltd., JSR Corporation, Asahi Kasei Corporation, Zeon Corporation, etc., can be used.

In the case where a BR is contained, the amount of the BR in 100% by mass of the rubber component is preferably not less than 30% by mass and more preferably not less than 35% by mass, and is preferably not greater than 70% by mass and more preferably not greater than 65% by mass. When the amount is in the above range, the effects tend to be more favorably achieved.

In the case where an SBR and/or a BR is contained, the total amount of the SBR and the BR in 100% by mass of the rubber component is preferably not less than 30% by mass and more preferably not less than 35% by mass, and is preferably not greater than 70% by mass and more preferably not greater than 65% by mass. When the total amount is in the above range, the effects tend to be more favorably achieved.

The carbon black contained in the topping rubber composition is not particularly limited, and examples of the carbon black include N134, N110, N220, N234, N219, N339, N330, N326, N351, N550, and N762. These carbon blacks may be used individually, or two or more of these carbon blacks may be used in combination.

The nitrogen adsorption specific surface area (N₂SA) of the carbon black is preferably not less than 110 m²/g, more preferably not less than 130 m²/g, and further preferably not less than 140 m²/g, and is preferably not greater than 220 m²/g, more preferably not greater than 180 m²/g, and further preferably not greater than 160 m²/g. When the N₂SA of the carbon black is in the above range, the effects tend to be more favorably achieved.

The N₂SA of the carbon black is a value measured according to JIS K6217-2: 2001.

As the carbon black, for example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The amount of the carbon black per 100 parts by mass of the rubber component only has to be 10 to 50 parts by mass, but is preferably not less than 15 parts by mass and more preferably not less than 25 parts by mass from the viewpoint of rubber strength, and is preferably not greater than 40 parts by mass and more preferably not greater than 35 parts by mass from the viewpoint of relative dielectric constant.

The topping rubber composition may contain silica.

Examples of the silica include dry-process silica (silicic anhydride) and wet-process silica (hydrous silicic acid), and wet-process silica is preferable for the reason that it has a higher silanol group content. These types of silica may be used individually, or two or more of these types of silica may be used in combination.

The nitrogen adsorption specific surface area (N₂SA) of the silica is preferably not less than 150 m²/g and more preferably not less than 180 m²/g, and is preferably not greater than 260 m²/g and more preferably not greater than 240 m²/g. When the nitrogen adsorption specific surface area of the silica is in the above range, the effects tend to be more favorably achieved.

The nitrogen adsorption specific surface area of the silica is a value measured by the BET method according to ASTM D3037-81.

As the silica, for example, products of Degussa, Rhodia, Tosoh Silica Corporation, Solvay Japan, Ltd., Tokuyama Corporation, etc., can be used.

In the case where silica is contained, the amount of the silica per 100 parts by mass of the rubber component is preferably not less than 10 parts by mass, and is preferably not greater than 80 parts by mass and more preferably not greater than 60 parts by mass. When the amount is in the above range, the effects tend to be more favorably achieved.

The topping rubber composition may contain a silane coupling agent together with the silica. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

In the case where a silane coupling agent is contained, the amount of the silane coupling agent per 100 parts by mass of the silica is preferably not less than 1 part by mass and more preferably not less than 3 parts by mass, and is preferably not greater than 20 parts by mass and more preferably not greater than 15 parts by mass. When the amount is in the above range, the effects tend to be more favorably achieved.

The topping rubber composition may contain an adhesive resin.

Examples of the adhesive resin include: aromatic hydrocarbon-based resins such as phenol-based resins, alkylphenol-based resins, terpene-based resins, coumarone-based resins, indene-based resins, coumarone-indene-based resins, styrene-based resins, acrylic-based resins, rosin-based resins, and dicyclopentadiene-based resins (DCPD-based resins), all of which are commonly used in the tire industry; aliphatic hydrocarbon-based resins such as C5 resins, C8 resins, C9 resins, and C5/C9 resins; and hydrogenated products of these resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Zeon Corporation, Harima Chemicals, Inc., TOAGOSEI CO., LTD., Arakawa Chemical Industries, Ltd., Taoka Chemical Co., Ltd., etc., can be used. These resins may be used individually, or two or more of these resins may be used in combination.

In the case where an adhesive resin is contained, the amount of the adhesive resin per 100 parts by mass of the rubber component is preferably not less than 1 part by mass and more preferably not less than 5 parts by mass, and is preferably not greater than 30 parts by mass and more preferably not greater than 20 parts by mass. When the amount is in the above range, the effects tend to be more favorably achieved.

The topping rubber composition may contain an oil.

Examples of the oil include process oils, vegetable fats and oils, and mixtures thereof. As the process oil, for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

In the case where an oil is contained, the amount of the oil per 100 parts by mass of the rubber component is preferably not less than 5 parts by mass and more preferably not less than 10 parts by mass, and is preferably not greater than 50 parts by mass and more preferably not greater than 30 parts by mass. When the amount is in the above range, the effects tend to be more favorably achieved.

The topping rubber composition may contain a wax.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination. Among them, petroleum waxes are preferable, and paraffin wax is more preferable.

As the wax, for example, products of Ouchi Shinko Chemical Industrial Co., Ltd., NIPPON SEIRO CO., LTD., Seiko Chemical Co., Ltd., etc., can be used.

In the case where a wax is contained, the amount of the wax per 100 parts by mass of the rubber component is preferably not less than 1 part by mass and more preferably not less than 2 parts by mass, and is preferably not greater than 20 parts by mass and more preferably not greater than 10 parts by mass. When the amount is in the above range, the effects tend to be more favorably achieved.

The topping rubber composition may contain an antioxidant.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination. Among them, p-phenylenediamine-based antioxidants are preferable.

As the antioxidant, for example, products of Seiko Chemical Co., Ltd., Sumitomo Chemical Co., Ltd., Ouchi Shinko Chemical Industrial Co., Ltd., Flexsys, etc., can be used.

In the case where an antioxidant is contained, the amount of the antioxidant per 100 parts by mass of the rubber component is preferably not less than 1 part by mass and more preferably not less than 2 parts by mass, and is preferably not greater than 10 parts by mass and more preferably not greater than 5 parts by mass. When the amount is in the above range, the effects tend to be more favorably achieved.

The topping rubber composition may contain stearic acid.

As the stearic acid, conventionally known stearic acids can be used, and, for example, products of NOF Corporation, Kao Corporation, FUJIFILM Wako Pure Chemical Corporation, New Japan Chemical Co., Ltd., etc., can be used.

In the case where stearic acid is contained, the amount of the stearic acid per 100 parts by mass of the rubber component is preferably not less than 1 part by mass and more preferably not less than 2 parts by mass, and is preferably not greater than 10 parts by mass and more preferably not greater than 5 parts by mass. When the amount is in the above range, the effects tend to be more favorably achieved.

The topping rubber composition may contain zinc oxide.

As the zinc oxide, conventionally known zinc oxides can be used, and, for example, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used.

In the case where zinc oxide is contained, the amount of the zinc oxide per 100 parts by mass of the rubber component is preferably not less than 1 part by mass and more preferably not less than 2 parts by mass, and is preferably not greater than 10 parts by mass and more preferably not greater than 5 parts by mass. When the amount is in the above range, the effects tend to be more favorably achieved.

The topping rubber composition may contain sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

In the case where sulfur is contained, the amount of the sulfur per 100 parts by mass of the rubber component is preferably not less than 1 part by mass and more preferably not less than 2 parts by mass, and is preferably not greater than 10 parts by mass and more preferably not greater than 5 parts by mass. When the amount is in the above range, the effects tend to be more favorably achieved.

The topping rubber composition may contain a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators are preferable.

In the case where a vulcanization accelerator is contained, the amount of the vulcanization accelerator per 100 parts by mass of the rubber component is preferably not less than 1 part by mass and more preferably not less than 2 parts by mass, and is preferably not greater than 10 parts by mass and more preferably not greater than 5 parts by mass. When the amount is in the above range, the effects tend to be more favorably achieved.

In addition to the above-described components, additives that are generally used in the tire industry, such as: organic peroxides; fillers such as calcium carbonate, talc, alumina, clay, aluminum hydroxide, and mica; and the like, may be further blended in the topping rubber composition. Each of the amounts of these additives per 100 parts by mass of the rubber component is preferably 0.1 to 200 parts by mass.

The topping rubber composition can be produced, for example, by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and is preferably 85 to 110°C. In addition, a composition obtained by kneading the vulcanizing agent and the vulcanization accelerator is normally subjected to vulcanization treatment such as press vulcanization. The vulcanization temperature is normally 140 to 190°C and preferably 150 to 185°C. The vulcanization time is normally 5 to 60 minutes and preferably 40 to 60 minutes.

The electronic module can be produced, for example, by a method in which the electronic component is sandwiched between sheets or the like into which an unvulcanized topping rubber composition is formed and then vulcanization is performed. In the case where an RFID tag is used as the electronic component, an RFID module is obtained.

In the electronic module, the volume of the rubber composition (topping rubber composition) covering the electronic component only has to be 500 to 10000 mm³, but is preferably not less than 1000 mm³ and more preferably not less than 1400 mm³ from the viewpoint of the readability of the electronic component, and is preferably not greater than 5000 mm³ and more preferably not greater than 3500 mm³ from the viewpoint of the weight balance of the tire.

The relative dielectric constant of the topping rubber composition only has to be not greater than 7, but is preferably not greater than 6 from the viewpoint of the readability of the electronic component. The lower limit of the relative dielectric constant is not particularly limited, but the relative dielectric constant is preferably not less than 3.

The relative dielectric constant is measured under the condition of a frequency of 915 MHz after vulcanization.

The topping rubber composition and the adjacent rubber member adjacent to the electronic module satisfies a relationship in which the difference in complex elastic modulus E* at 60°C therebetween is not greater than 2.0 MPa. In the case where a plurality of adjacent rubber members are present, it is sufficient that at least one of the plurality of adjacent rubber members satisfies the above relationship, and it is preferable that all the adjacent rubber members satisfy the above relationship.

The difference between the complex elastic modulus E* of the topping rubber composition and the complex elastic modulus E* of the adjacent rubber member only has to be not greater than 2 MPa, but is preferably not greater than 1.5 MPa and more preferably not greater than 1 MPa from the viewpoint of durability, and may be 0 MPa.

The complex elastic moduli E* are measured at 60°C after vulcanization.

The complex elastic modulus E* of the topping rubber composition is preferably not less than 2 MPa and more preferably not less than 3 MPa, and is preferably not greater than 10 MPa and more preferably not greater than 8 MPa. When the complex elastic moduli E* is in the above range, the effects tend to be more favorably achieved.

The complex elastic modulus E* of the adjacent rubber member is preferably not less than 2 MPa and more preferably not less than 3 MPa, and is preferably not greater than 10 MPa and more preferably not greater than 8 MPa. When the complex elastic moduli E* is in the above range, the effects tend to be more favorably achieved.

The difference in amount of the isoprene-based rubber, the difference in amount of the styrene-butadiene rubber, and the different in amount of the butadiene rubber in 100% by mass of the rubber component, between the topping rubber composition and the adjacent rubber member, are each preferably not greater than 20% by mass, more preferably not greater than 10% by mass, further preferably not greater than 5% by mass, and particularly preferably not greater than 1% by mass, and may each be 0% by mass. When these differences are in the above range, stress concentration on the interface between the topping rubber composition and the adjacent rubber member is further inhibited, and excellent durability is achieved.

The adjacent rubber member can contain components (chemicals) that are the same as those of the topping rubber composition. A suitable amount of each component is also the same as that in the topping rubber composition.

In the tire, a location where the electronic module is disposed is not particularly limited, but the electronic module can be disposed, for example, between a shoulder portion and a rim flange contact portion, and is preferably disposed inside a sidewall portion.

The tire according to the present invention is produced by a normal method using the above topping rubber composition, etc. Specifically, an unvulcanized tire is formed by extruding the topping rubber composition into a desired shape in an unvulcanized state, covering the electronic component with the topping rubber composition, and then forming the topping rubber composition and the electronic component together with other tire members on a tire forming machine by a general method. A tire is obtained by heating and pressurizing the unvulcanized tire in a vulcanizing machine.

The tire may be either a pneumatic tire or an airless (solid) tire, but is preferably a pneumatic tire. In addition, the tire is used as a tire for a passenger car, a tire for a truck or a bus, a tire for a motorcycle, a tire for racing, etc., and is particularly suitable as a tire for a passenger car.

### EXAMPLES

The present invention will be specifically described by means of examples, but the present invention is not limited to these examples.

Various chemicals used in examples and comparative examples are described below.
IR: NIPOL IR 2200 manufactured by Zeon Corporation
BR: UBEPOL BR150B manufactured by Ube Industries, Ltd.
SBR: SL552 manufactured by JSR Corporation
Carbon black: SHOBLACK N234 (N₂SA: 145 m²/g) manufactured by Cabot Japan K.K.
Silica: Nipsil AQ (N₂SA: 200 m²/g) manufactured by Tosoh Silica Corporation
Zinc oxide: Zinc Oxide No. 1 manufactured by Mitsui Mining & Smelting Co., Ltd.
Stearic acid: stearic acid "Tsubaki" manufactured by NOF Corporation
Antioxidant: NOCRAC 6C (N-phenyl-N'-(1,3-dimethylbutyl)-p-phenylenediamine) (6PPD) manufactured by Ouchi Shinko Chemical Industrial Co., Ltd.
Sulfur: powdery sulfur manufactured by Karuizawa Sulfur Co, Ltd.
Vulcanization accelerator: NOCCELER CZ (N-cyclohexyl-2-benzothiazolyl sulfenamide) manufactured by Ouchi Shinko Chemical Industrial Co., Ltd.

### (Examples and Comparative Examples)

In accordance with each of the blending contents shown in Table A below, the materials other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized topping rubber composition.

In accordance with each of the blending contents shown in Table B below, the materials other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized adjacent rubber member.

The unvulcanized topping rubber composition was formed into sheets, an RFID tag was sandwiched between the sheets, and the unvulcanized adjacent rubber member was formed into the shape of a sidewall. The sheets and the unvulcanized adjacent rubber member were attached together, then other tire members were further attached thereto, and press vulcanization was performed under a condition of 150°C for 50 minutes, to obtain a test tire (size: 205/55R16).

The obtained test tires were evaluated as described below, and the results are shown in Tables 1 to 8. References in the respective tables are as follows.
Tables 1 and 2: Example 1-1
Tables 3 and 4: Example 2-1
Tables 5 and 6: Example 3-1
Tables 7 and 8: Example 4-1

### <Viscoelasticity Test (Complex Elastic Modulus)>

For a test piece cut out from each of the topping rubber composition and the adjacent rubber member of a test tire, a complex elastic modulus E* was measured under the conditions of 60°C, a frequency of 10 Hz, an initial strain of 10%, and a dynamic strain of 1% using a spectrometer manufactured by Ueshima Seisakusho Co., Ltd.

### <Peeling Test (Adhesive Durability)>

For a test piece cut out from a region including an adhesive surface of the topping rubber composition and the adjacent rubber member of a test tire, the peeling strength of the adhesive surface was measured according to JIS K6256-2 and is indicated as an index (adhesive durability index) with the result of the reference being regarded as 100. A higher value indicates that the peeling strength of the adhesive surface is higher and the durability is better. An index of 80 or higher is favorable.

### <Tensile Test (Rubber Strength)>

For a test piece cut out from each of the topping rubber composition and the adjacent rubber member of a test tire, a test was conducted according to JIS K6251 at room temperature at a speed of 500 mm/min using an autograph manufactured by Shimadzu Corporation, and strength at break and elongation at break were measured. Then, the breaking energy (strength at break × elongation at break / 2) was calculated for each blending formula, and is indicated as an index (rubber strength index) with the result of the reference being regarded as 100. A higher value indicates that the rubber strength is higher and the durability is better. An index of 80 or higher is favorable.

### <Relative Dielectric Constant>

For a test piece cut out from the topping rubber composition of a test tire, a relative dielectric constant was measured by a probe method under the condition of 23°C and a frequency of 915 MHz using MS46122A manufactured by Anritsu Corporation.

### <RFID Tag Readability>

The RFID tag in a test tire was read using an RFID reader BHT-1200 manufactured by Denso Wave Incorporated, and the result is indicated as an index (RFID tag readability index) with the reading distance of the reference being regarded as 100. A higher value indicates that the reading distance is longer and the RFID tag readability is better. An index of 80 or higher is favorable.

### <Tire Balance>

A test tire was mounted to a tire balance measuring device manufactured by Iyasaka Seiki Limited, and the unbalanced weight of the test tire was measured. The result is indicated as an index (tire balance index) with the reciprocal of the unbalanced weight of the reference being regarded as 100. A higher value indicates that the unbalanced weight is smaller and the tire balance is better. An index of 80 or higher is favorable.

### <High-Speed Durability>

A test tire was mounted to a drum tester and run under the conditions of 200 km/h, a load of 500 kg, a temperature of 23°C, and a tire internal pressure of 2.0 MPa. The running distance at which tire damage occurred is indicated as an index (high-speed durability index) with the running distance of the reference being regarded as 100. A higher value indicates that the running distance is longer and the durability is better. An index of 80 or higher is favorable.

Topping Rubber Composition

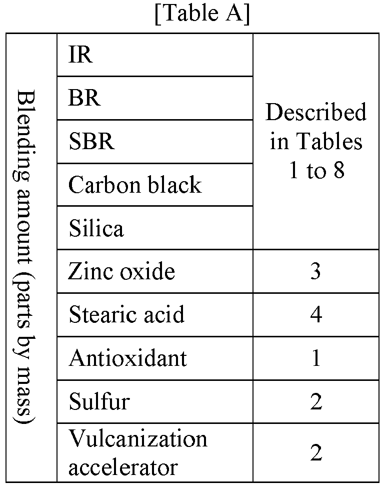

Adj acent Rubber Member

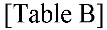

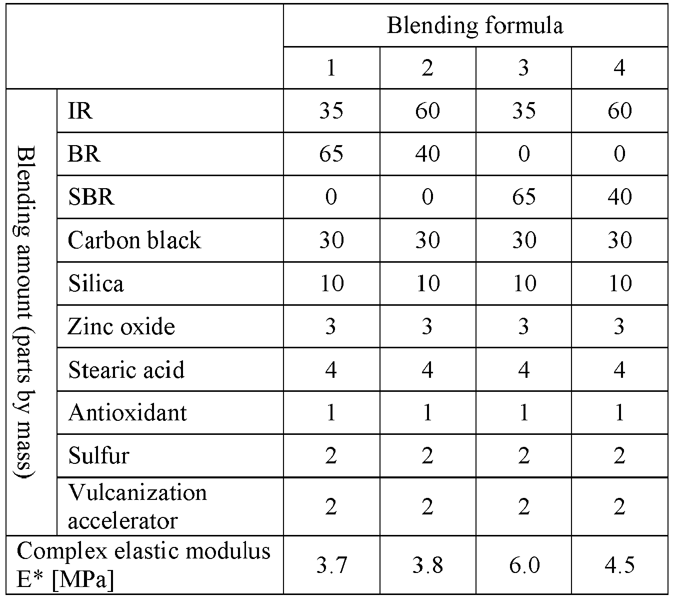

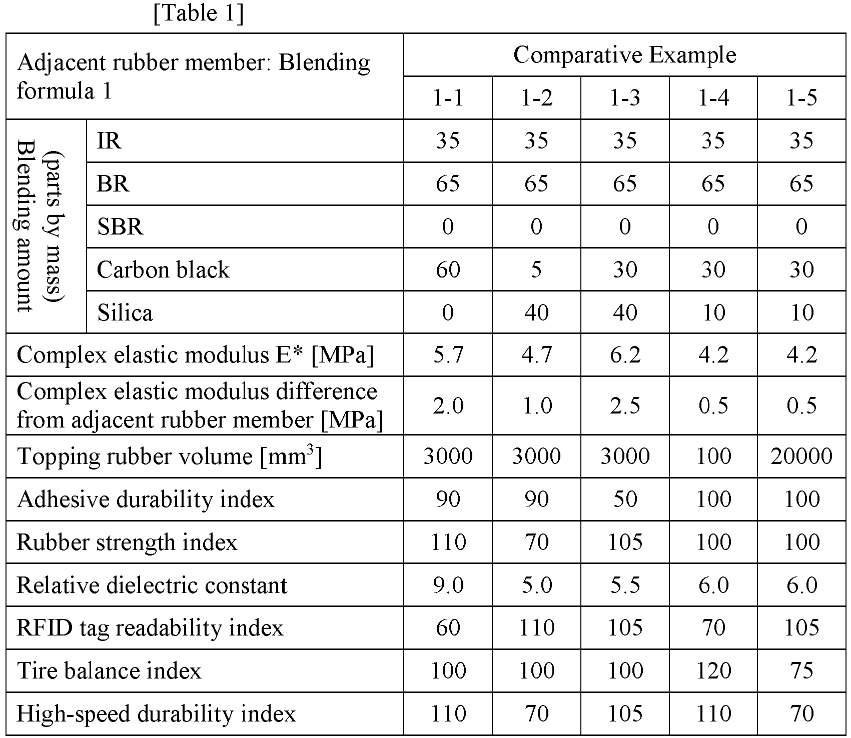

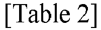

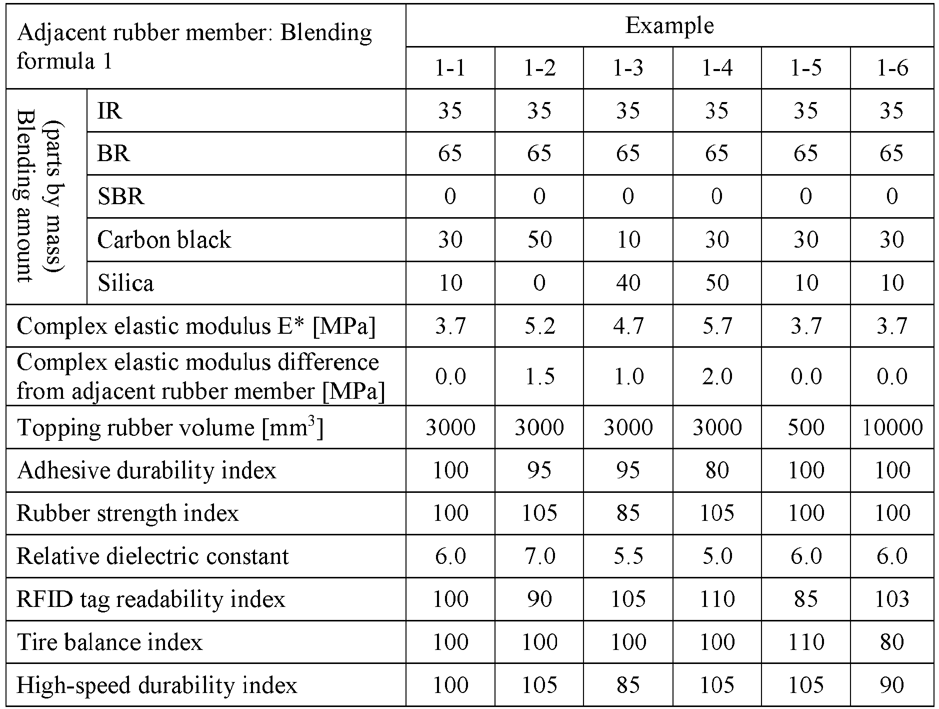

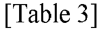

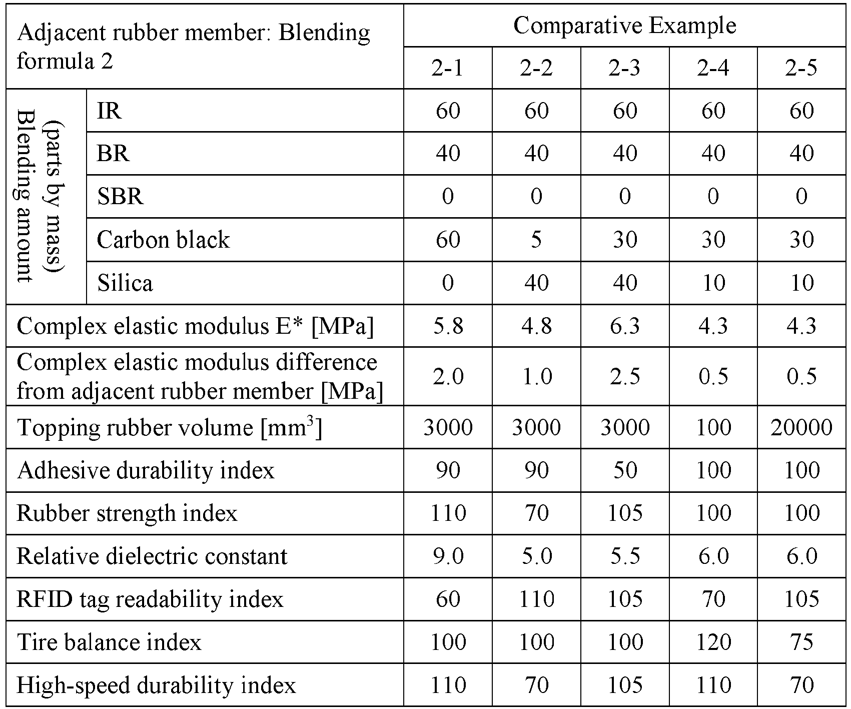

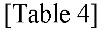

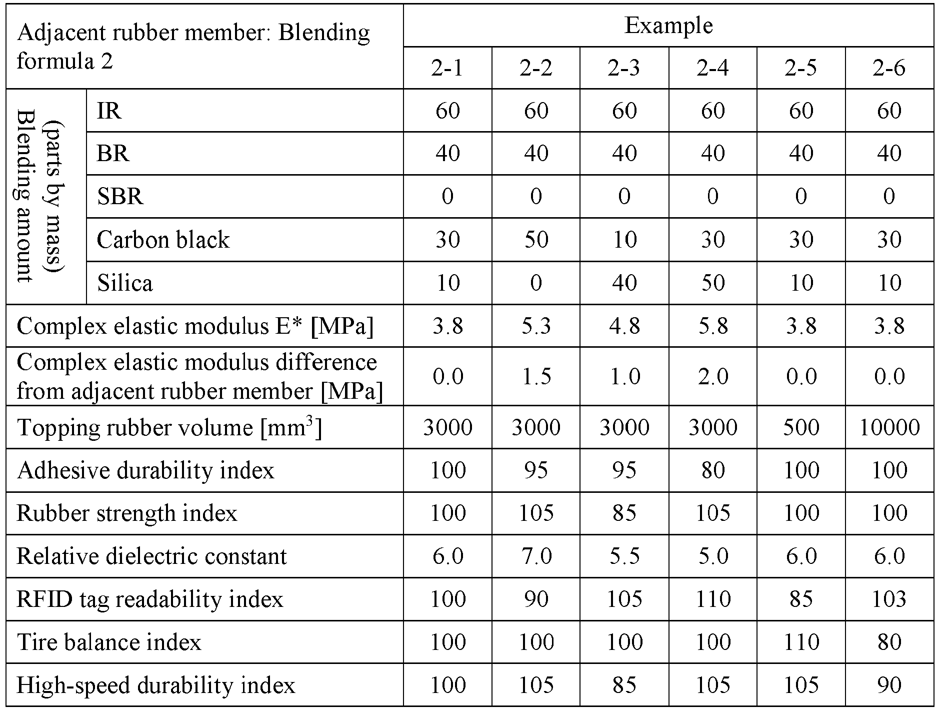

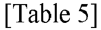

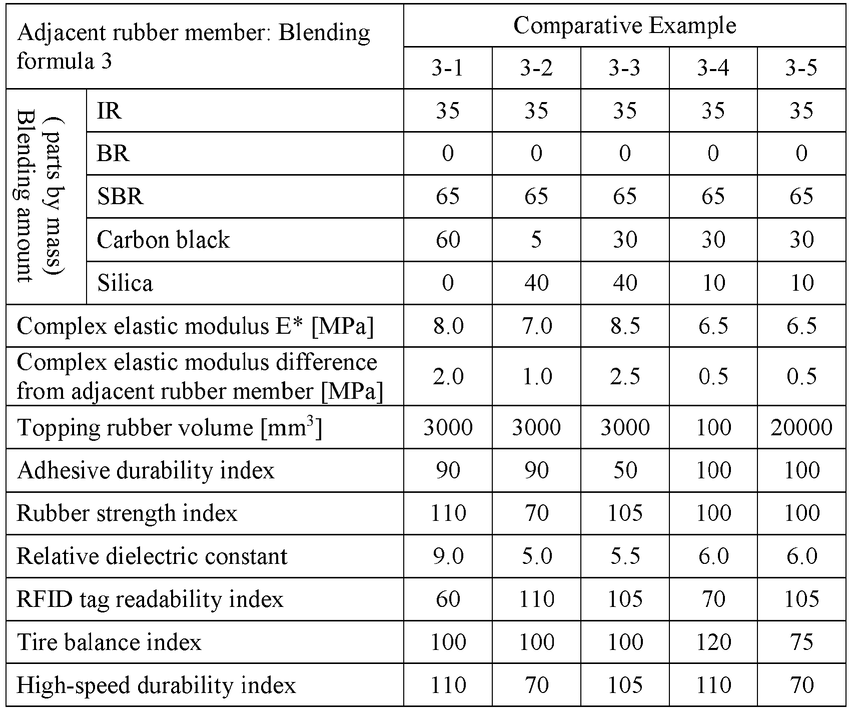

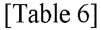

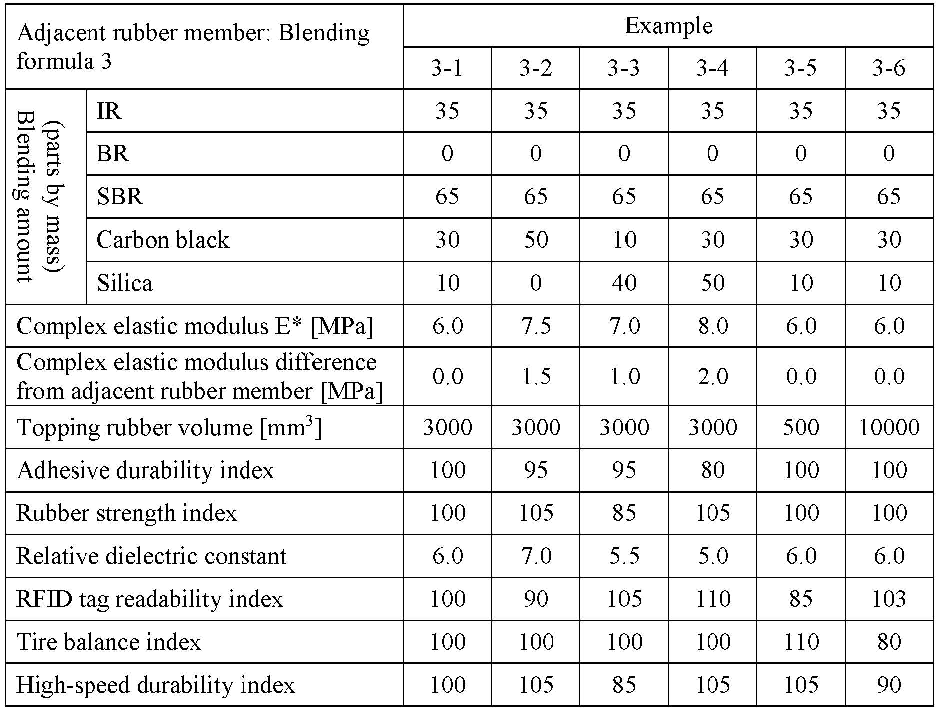

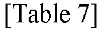

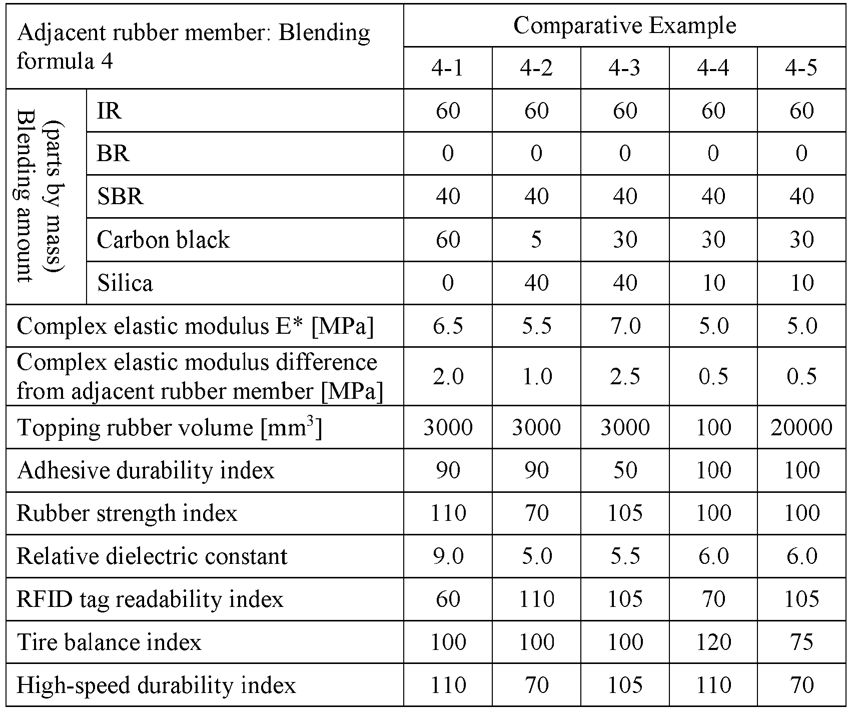

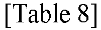

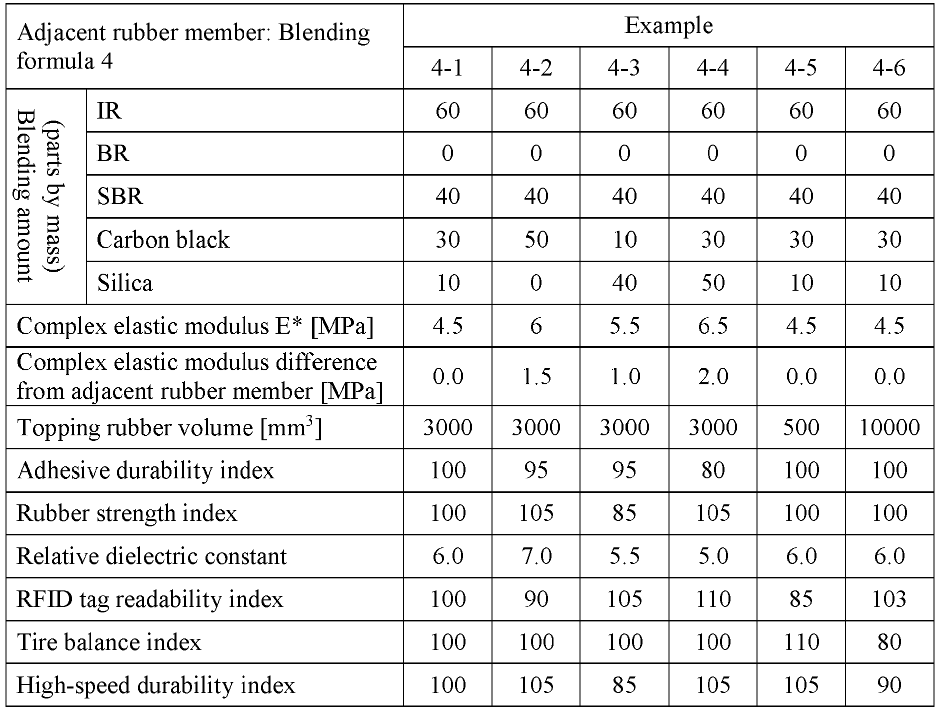

From Tables 1 to 8, the examples had both durability and electronic component readability (RFID tag readability) at favorable levels and also had good tire balance.

A tire capable of improving durability and the readability of an electronic component such as an RFID tag in a well-balanced manner is provided. The tire includes: an electronic module including an electronic component and a rubber composition covering the electronic component; and an adjacent rubber member adjacent to the electronic module, a difference in complex elastic modulus E* at 60°C between the rubber composition and the adjacent rubber member is not greater than 2.0 MPa, an amount of carbon black per 100 parts by mass of a rubber component in the rubber composition is 10 to 50 parts by mass, the rubber composition has a volume of 500 to 10000 mm³, and the rubber composition has a relative dielectric constant of 7 or less at 915 MHz.

## Claims

1. A tire comprising: an electronic module including an electronic component and a rubber composition covering the electronic component; and an adjacent rubber member adjacent to the electronic module, wherein
a difference in complex elastic modulus E* at 60°C between the rubber composition and the adjacent rubber member is not greater than 2.0 MPa, wherein the complex elastic modulus E* is measured under the conditions of a frequency of 10 Hz, an initial strain of 10%, and a dynamic strain of 1%,
an amount of carbon black per 100 parts by mass of a rubber component in the rubber composition is 10 to 50 parts by mass,
the rubber composition has a volume of 500 to 10000 mm³, and
the rubber composition has a relative dielectric constant of 7 or less at 915 MHz under the condition of 23°C.

2. The tire according to claim 1, wherein a difference in amount of an isoprene-based rubber, a difference in amount of a styrene-butadiene rubber, and a difference in amount of a butadiene rubber in 100% by mass of a rubber component between the rubber composition and the adjacent rubber member are each not greater than 20% by mass.

3. The tire according to claim 1 or 2, wherein an amount of an isoprene-based rubber in 100% by mass of the rubber component of the rubber composition is 30 to 100% by mass, and a total amount of a styrene-butadiene rubber and a butadiene rubber in 100% by mass of the rubber component of the rubber composition is 0 to 70% by mass.

## Patentansprüche

1. Reifen, der umfasst: ein elektronisches Modul mit einem elektronischen Bauteil und einer Kautschukzusammensetzung, die das elektronische Bauteil bedeckt; und ein angrenzendes Kautschukelement, das an das elektronische Modul angrenzt, wobei
ein Unterschied im komplexen Elastizitätsmodul E* bei 60°C zwischen der Kautschukzusammensetzung und dem angrenzenden Kautschukelement nicht größer als 2,0 MPa ist, wobei der komplexe Elastizitätsmodul E* unter den Bedingungen einer Frequenz von 10 Hz, einer anfänglichen Dehnung von 10% und einer dynamischen Dehnung von 1% gemessen wird,
eine Menge an Kohleschwarz pro 100 Masseteile einer Kautschukkomponente in der Kautschukzusammensetzung 10 bis 50 Masseteile beträgt,
die Kautschukzusammensetzung ein Volumen von 500 bis 10000 mm³ hat, und
die Kautschukzusammensetzung eine relative Dielektrizitätskonstante von 7 oder weniger bei 915 MHz und der Bedingung von 23°C aufweist.

2. Reifen nach Anspruch 1, wobei ein Unterschied in der Menge eines Kautschuks auf Isoprenbasis, ein Unterschied in der Menge eines StyrolButadien-Kautschuks und ein Unterschied in der Menge eines ButadienKautschuks in 100 Massenprozent einer Kautschukkomponente zwischen der Kautschukzusammensetzung und dem benachbarten Kautschukelement jeweils nicht größer als 20 Massenprozent ist.

3. Reifen nach Anspruch 1 oder 2, wobei eine Menge eines Kautschuks auf Isoprenbasis in 100 Massenprozent der Kautschukkomponente der Kautschukzusammensetzung 30 bis 100 Massenprozent beträgt und eine Gesamtmenge eines Styrol-ButadienKautschuks und eines Butadienkautschuks in 100 Massenprozent der Kautschukkomponente der Kautschukzusammensetzung 0 bis 70 Massenprozent beträgt.

## Revendications

1. Pneu comprenant : un module électronique contenant un composant électronique et une composition de caoutchouc couvrant le composant électronique ; et un élément en caoutchouc adjacent qui est adjacent au module électronique, dans lequel
la différence de module élastique complexe E* à 60°C entre la composition de caoutchouc et l'élément en caoutchouc adjacent n'est pas supérieure à 2,0 MPa, lequel module élastique complexe E* est mesuré dans des conditions de fréquence de 10 Hz, de déformation initiale de 10 %, et de déformation dynamique de 1 %,
la quantité de noir de carbone pour 100 parties en masse de composant caoutchouc dans la composition de caoutchouc est de 10 à 50 parties en masse,
la composition de caoutchouc a un volume de 500 à 10 000 mm³, et
la composition de caoutchouc a une constante diélectrique relative de 7 ou moins à 915 MHz dans des conditions à 23°C.

2. Pneu selon la revendication 1, dans lequel la différence de quantité de caoutchouc à base d'isoprène, la différence de quantité de caoutchouc de styrène-butadiène, et la différence de quantité de caoutchouc de butadiène dans 100 % en masse de composant caoutchouc entre la composition de caoutchouc et l'élément en caoutchouc adjacent sont chacune non supérieures à 20 % en masse.

3. Pneu selon la revendication 1 ou 2, dans lequel la quantité de caoutchouc à base d'isoprène dans 100 % en masse du composant caoutchouc de la composition de caoutchouc est de 30 à 100 % en masse, et la quantité totale de caoutchouc de styrène-butadiène et de caoutchouc de butadiène dans 100 % en masse du composant caoutchouc de la composition de caoutchouc est de 0 à 70 % en masse.
